# FASCICULE DE BREVET EUROPEEN

(11) **EP 3 604 846 B1**
(45) Date de publication et mention de la délivrance du brevet: **31.08.2022**
(21) Numéro de dépôt: 19182068.7
(22) Date de dépôt: 24.06.2019
(51) Int. Cl.: F16D 25/10, F16D 25/12, F16D 21/06

(54) **MECANISME D'EMBRAYAGE HUMIDE ET MODULE DE TRANSMISSION DE COUPLE COMPRENANT CE MECANISME D'EMBRAYAGE HUMIDE**
NASSKUPPLUNGSMECHANISMUS UND DREHMOMENTÜBERTRAGUNGSMODUL, DAS EINEN SOLCHEN NASSKUPPLUNGSMECHANISMUS UMFASST
WET CLUTCH MECHANISM AND TORQUE TRANSMISSION MODULE COMPRISING SAID WET CLUTCH MECHANISM

(30) Priorité: 31.07.2018 FR 1857163
(43) Date de publication de la demande: 05.02.2020
(73) Titulaire: VALEO EMBRAYAGES, 80009 Amiens (FR)
(72) Inventeur: RIETHMULLER, Markus, 95892 CERGY PONTOISE (FR); DOLE, Arnaud, 95892 CERGY PONTOISE (FR); VUAROQUEAUX, Guillaume, 95892 CERGY PONTOISE (FR); THIBAUT, François, 95892 CERGY PONTOISE (FR); CORNET, Vincent, 95892 CERGY PONTOISE (FR)
(74) Mandataire: Valeo Powertrain Systems

(56) Documents cités:
- DE-A1-102004 012 948
- DE-A1-102007 024 788
- US-B2- 8 056 691

## Description

La présente invention concerne un mécanisme d'embrayage humide et un module de transmission de couple, et a trait plus particulièrement de l'assemblage d'un tel module de transmission de couple sur une transmission, notamment pour un véhicule automobile ou pour un véhicule dit industriel, ce dernier étant par exemple un poids lourd, un véhicule de transport en commun, ou un véhicule agricole.

Il existe des modules de transmission de couple pouvant être assemblés et désassemblés sur une chaîne de transmission en un seul bloc. Le module de transmission de couple comprend alors un mécanisme d'embrayage humide pré-assemblé avec un système d'actionnement de manière à former un bloc unitaire. Ce module est fixé directement à un carter de transmission, par exemple un carter de boite de vitesses.

De manière connue, cet assemblage sur la chaîne de transmission est une étape difficile à mettre en œuvre du fait de la difficulté d'accès d'un dispositif de fixation dudit module sur le carter de boite de vitesses.

La demande de brevet US2014182994 A1 décrit un dispositif de fixation d'un module comprenant un mécanisme à double embrayage humide sur une chaine de transmission, mettant en œuvre des vis de fixation orientées axialement et situées sur des bras d'extension radiale d'un diamètre supérieur audit mécanisme à double embrayage.

Cette configuration permet de simplifier l'étape de fixation en positionnant radialement les vis sur un diamètre extérieur au-delà du mécanisme d'embrayage, créant ainsi un accès autorisant le passage d'un outil pour la fixation dudit mécanisme d'embrayage. Cependant, cet espace supplémentaire conduit à un encombrement radial plus important dudit module de transmission de couple; Il est aussi nécessaire de dimensionner les bras d'extension radiale comme support des vis de fixation et impose de s'adapter aux contraintes dimensionnelles du carter de boite de vitesses.

Pour palier à ces inconvénients, la demande de brevet WO2018/029400 A1 décrit un dispositif de fixation mettant en œuvre des vis orientées axialement au travers du mécanisme à double embrayage humide, afin de collaborer avec un alésage taraudé situé sur une face en regard de la transmission.

Cette configuration permet certes de ne pas augmenter le diamètre extérieur du support de fixation par rapport au mécanisme d'embrayage et d'améliorer la transmission du couple du mécanisme d'embrayage ; cependant, la solution impose de réaliser des ouvertures axiales dans les différents éléments du mécanisme d'embrayage, afin de permettre l'insertion de la vis de fixation et le passage de l'outil de fixation. Par la suite, ces ouvertures réalisées dans les composants du mécanisme d'embrayage ne peuvent pas être rebouchés puisqu'ils assurent les passages successifs de l'outil de fixation pour assembler et désassembler le module. Ces trous non rebouchés génèrent alors des pertes de liquide d'huile de refroidissement qui sont préjudiciables au bon fonctionnement du système de transmission. Par ailleurs, il est nécessaire d'indexer angulairement chaque élément du mécanisme d'embrayage afin de faire correspondre les différentes ouvertures avant de pouvoir insérer la vis de fixation correspondante ou l'outil de fixation, ce qui créé des contraintes supplémentaires et des erreurs parfois irréversibles. <A>

L'invention a notamment pour but d'apporter une solution simple, efficace et économique à ce problème.

Le but de la présente invention est notamment de proposer un mécanisme à embrayage humide pour système de transmission <A> Egalement, un mécanisme d'embrayage humide pour module de transmission de couple comportant au moins un premier embrayage, de type multidisque, commandé pour accoupler sélectivement un arbre menant à un premier arbre mené, par exemple un arbre de boite de vitesses et comprenant :
- un porte-disques d'entrée de couple agencé pour être lié en rotation avec l'arbre menant selon un axe de rotation par l'intermédiaire d'un moyeu d'entrée ;
- un ensemble multidisques rapporté sur le porte-disques d'entrée comportant des flasques et des disques de friction ;
- un palier de guidage configuré pour supporter les efforts radiaux du mécanisme d'embrayage humide ;
est connu des documents DE102004012948 A1 et DE102007024788 A1. de couple permettant de résoudre au moins une partie de certains inconvénients de l'art antérieur.

Dans ce but, l'invention propose un mécanisme d'embrayage humide pour module de transmission de couple comportant au moins un premier embrayage, de type multidisque, commandé pour accoupler sélectivement un arbre menant à un premier arbre mené, par exemple un arbre de boite de vitesses et comprenant :
- un porte-disques d'entrée de couple agencé pour être lié en rotation avec l'arbre menant selon un axe de rotation O par l'intermédiaire d'un moyeu d'entrée ;
- un ensemble multidisques rapporté sur le porte-disques d'entrée comportant des flasques et des disques de friction;
- un palier de guidage inséré dans une portion d'appui cylindrique du porte-disques d'entrée et configuré pour supporter les efforts radiaux du mécanisme d'embrayage humide,
- une bague de lubrification de l'embrayage dans laquelle des conduites de lubrification sont intercalées axialement entre le palier de guidage et le moyeu d'entrée,
ladite bague de lubrification comportant une portion filetée apte à être vissée sur le module de transmission de couple.

Ce mécanisme d'embrayage humide, selon l'invention, présente l'avantage, de pouvoir être assemblé et désassemblé sur le module de transmission de couple sans destruction. Cela autorise la maintenance du module de transmission de couple à moindre cout.

Le mécanisme d'embrayage humide forme dans le cas présent un sous-ensemble pré-assemblé dont la fixation sur le système d'actionnement est simplifiée grâce à la présence de la portion filetée.

Avantageusement, la bague de lubrification peut être en appui axial sur le palier de guidage. De cette manière, la bague de lubrification assure simultanément les fonctions de calage axial au sein du mécanisme d'embrayage humide, de fixation et participe à la lubrification du premier embrayage.

Le mécanisme d'embrayage humide peut comprendre des moyens de préhension formés sur la bague de lubrification, les moyens de préhension étant apte à recevoir un outil de préhension. Ces moyens de préhension présentent l'avantage de simplifier l'assemblage du mécanisme d'embrayage humide sur le module de transmission de couple. L'emploi d'un outil de préhension minimise les risques d'erreur de montage.

La bague de lubrification peut comprendre un alésage intérieur et un pourtour extérieur et des conduites de lubrification traversant radialement de part en part ladite bague. Cette bague de lubrification présente l'avantage de canaliser le fluide de refroidissement en direction du premier embrayage et favorise la lubrification du premier embrayage.

L'invention peut présenter l'une ou l'autre des caractéristiques décrites ci-dessous combinées entre elles ou prises indépendamment les unes des autres :
- le porte-disques d'entrée de couple peut comprendre une portion d'appui cylindrique disposée sur sa périphérie interne ;
- le palier de guidage peut comporter des éléments de roulements disposés radialement entre une bague extérieure de guidage et une bague intérieure de guidage ;
- le palier de guidage peut être un roulement à billes ;
- le palier de guidage peut être un palier à aiguilles ;
- la bague de lubrification peut être en appui axial sur la bague intérieure de guidage. Selon cette variante de mise en œuvre, l'invention présente l'avantage de simplifier l'assemblage du mécanisme d'embrayage humide. La bague de lubrification assure simultanément les fonctions de calage axial au sein du mécanisme d'embrayage humide, de fixation et participe à la lubrification du premier embrayage ;
- les conduites de lubrification peuvent être réparties angulairement autour de l'axe O ;
- la bague de lubrification peut comprendre un canal annulaire formé sur l'alésage intérieur communiquant avec les conduites de lubrification ;
- les moyens de préhension peuvent être formés sur une face latérale opposée à la face latérale venant en appui axial sur le palier de guidage ;
- les moyens de préhension peuvent être des trous ou des rainures répartis angulairement autour de l'axe O ;
- les rainures peuvent être orientées radialement par rapport à l'axe O ;
- les trous peuvent être borgnes. Les trous borgnes présentent l'avantage d'améliorer l'efficacité du refroidissement en évitant toute communication avec les conduites de lubrification.
- selon une variante, la portion filetée peut être formée sur l'alésage intérieur de la bague de lubrification ;
- selon une autre variante, la portion filetée peut être formée sur une portée externe de la bague de lubrification ;
- le mécanisme d'embrayage humide peut comprendre un deuxième embrayage, de type multidisques, commandés pour accoupler sélectivement un arbre menant à un deuxième arbre mené, les premier et deuxième embrayages étant disposés radialement l'un au dessus de l'autre, le deuxième embrayage comprenant un porte-disques d'entrée de couple solidaire en rotation avec le porte-disques d'entrée de couple du premier embrayage, de manière à former un porte-disques d'entrée commun comprenant la portion d'appui cylindrique dans laquelle est insérée le palier de guidage commun aux premier et deuxième embrayages ;
- le premier embrayage E1 peut comprendre un premier porte-disques de sortie de couple agencé pour être lié en rotation avec le premier arbre mené par l'intermédiaire d'un moyeu de sortie et le deuxième embrayage E2 peut comprendre un deuxième porte-disques de sortie de couple agencé pour être lié en rotation avec le deuxième arbre mené par l'intermédiaire d'un moyeu de sortie ;
- le mécanisme d'embrayage humide peut comprendre un palier axial interposé axialement entre la bague de lubrification et le moyeu de sortie du deuxième porte-disques de sortie, ledit palier axial étant configuré pour supporter les efforts axiaux du mécanisme d'embrayage humide ;
- des ouvertures de passage d'outil peuvent être aménagées sur le porte-disques d'entrée et / ou sur le premier porte-disques de sortie et / ou le deuxième porte-disques de sortie, les ouvertures de passage d'outil étant orientées axialement en direction des moyens de préhension et étant aptes à laisser passer un outil de préhension ;
- le mécanisme d'embrayage humide peut être pourvu d'un premier jeu d'ouvertures de passage d'outil qui, lorsque le mécanisme d'embrayage humide est dans une première position d'indexation, délimitent un premier canal rectiligne de passage le long d'un premier axe de pénétration parallèle à l'axe de rotation O, traversant le mécanisme d'embrayage humide de part en part jusqu'au moyens de préhension formés sur la bague de lubrification pour l'insertion d'un outil de préhension ;
- le porte-disques d'entrée peut comporter un voile d'entrée s'étendant radialement entre un moyeu cannelé et un porte-disques extérieur supportant l'ensemble multidisques du premier embrayage, l'une des ouvertures du premier jeu d'ouvertures de passage d'outil étant formée dans le voile d'entrée.
- le premier porte-disques de sortie peut comporter l'une des ouvertures du premier jeu d'ouvertures de passage d'outil, ladite ouverture étant formée dans le premier moyeu de sortie ;
- le deuxième porte-disques de sortie peut comporter l'une des ouvertures du premier jeu d'ouvertures de passage d'outil, ladite ouverture étant formée dans le deuxième moyeu de sortie ;

L'invention a également pour objet, selon un de ses aspects, un module de transmission de couple comprenant :
- un mécanisme d'embrayage humide reprenant tout ou partie des caractéristiques mentionnées précédemment;
- un système d'actionnement du mécanisme d'embrayage humide permettant de configurer le premier et / ou le deuxième embrayage dans une configuration embrayée ou débrayée, ledit système d'actionnement comprenant une portée d'extension axiale selon l'axe O apte à supporter radialement le mécanisme d'embrayage humide,
le mécanisme d'embrayage humide et le système d'actionnement étant configurés pour être fixés solidairement à l'aide d'une liaison filetée dans laquelle la bague de lubrification est vissée directement sur la portée d'extension axiale.

Ce module de transmission de couple, selon cet autre aspect de l'invention, comprend une liaison sans jeu entre les deux sous-ensembles. La liaison sans jeu présente l'avantage grâce à la présence de la portion filetée d'être amovible et fiable.

La liaison filetée permet également de récupérer l'ensemble des tolérances de montage et de fabrication présentes dans un mécanisme d'embrayage humide.

Cet autre aspect de l'invention peut présenter l'une ou l'autre des caractéristiques décrites ci-dessous combinées entre elles ou prises indépendamment les unes des autres :
- la portée d'extension axiale du système d'actionnement peut comprendre une portion filetée complémentaire à la portion filetée de la bague de lubrification. Avantageusement, le vissage de la portion filetée de la bague de lubrification sur la portion filetée complémentaire du système d'actionnement constitue la liaison filetée ;
- le système d'actionnement peut comprendre un carter logeant au moins un piston d'actionnement agencé pour embrayer ou débrayer le premier et / ou le deuxième embrayage ;
- le carter peut comprendre des conduites d'alimentation en fluide de refroidissement qui communiquent directement avec les conduites de lubrification de la bague de lubrification ;
- la portée d'extension axiale peut être formée directement dans le carter ;
- la portée d'extension axiale peut être rapportée sur le carter ;
- la portée d'extension axiale peut être disposée radialement à l'intérieur de la bague intérieure du palier de guidage ;
- la portée d'extension axiale peut être disposée radialement à l'intérieur de la bague de lubrification ;
- la portée d'extension axiale peut comprendre une extrémité libre orientée en direction du premier porte-disques de sortie, la liaison filetée étant disposée sur l'extrémité libre ;
- le palier de guidage peut être en appui axial sur un élément d'arrêt formé directement sur la portée d'extension axiale ou rapporté sur la portée d'extension axiale ;
- l'élément d'arrêt peut être un anneau fendu ;
- l'élément d'arrêt peut être un bossage ou un épaulement formé directement dans la portée d'extension axiale du système d'actionnement ;
- le système d'actionnement peut permettre de configurer l'au moins un embrayage dans une configuration comprise entre :
   o une configuration dite embrayée dans laquelle le porte-disques de sortie de couple est couplé en rotation avec le porte-disques d'entrée de couple ; et
   o une configuration dite débrayée dans laquelle le porte-disques de sortie de couple est découplé en rotation du porte-disques de couple ;

L'invention a également pour objet, selon un autre de ses aspects, un kit d'assemblage comportant un module de transmission de couple reprenant tout ou partie des caractéristiques mentionnées précédemment et un outil de préhension apte à être inséré dans les ouvertures de passage d'outil formées sur le mécanisme d'embrayage humide pour visser le mécanisme d'embrayage humide sur le système d'actionnement .

L'invention a également pour objet un procédé de montage d'un module de transmission de couple sur un carter de transmission reprenant tout ou partie des caractéristiques mentionnées précédemment comportant au moins les étapes suivantes :
- fournir un mécanisme d'embrayage humide agencé selon une première position d'indexation, un système d'actionnement et un outil de préhension,
- fixer le système d'actionnement sur le carter de transmission,
- introduire l'outil de préhension axialement suivant un axe de pénétration en direction du palier de guidage, à travers les ouvertures de passage d'outil formée sur le mécanisme d'embrayage humide, de manière à ce qu'une extrémité de l'outil de préhension soit en prise avec les moyens de préhension,
- puis positionner et visser le mécanisme d'embrayage humide sur le système d'actionnement à l'aide de l'outil de préhension.

Le procédé de montage est simplifié grâce à la présence de la liaison filetée aménagée entre le mécanisme d'embrayage humide et le système d'actionnement. L'emploi d'un outil de préhension autorise un serrage au couple de la bague intérieure de guidage sur la portée d'extension axiale et minimise les risques d'erreur de montage.

Dans la première position d'indexation angulaire, les différentes ouvertures sont coïncidentes et permettent un contrôle visuel de la présence des différents composants du mécanisme d'embrayage humide.

L'invention sera mieux comprise à la lecture de la description qui va suivre, donnée uniquement à titre d'exemple et faite en se référant aux dessins annexés dans lesquels :
- la figure 1 est une vue en coupe axiale d'un module de transmission de couple assemblé selon un premier mode de mise en œuvre de l'invention ;
- la figure 2 est une vue isométrique de la bague de lubrification du module de transmission de couple selon le premier mode de mise en œuvre de l'invention de la figure 1 ;
- la figure 3 est une vue en coupe du module de transmission de couple avant assemblage selon le premier mode de mise en œuvre de l'invention de la figure 1 ;
- la figure 4 est une vue en coupe axiale d'un module de transmission de couple assemblé selon un deuxième mode de mise en œuvre de l'invention ;

Dans la suite de la description et des revendications, on utilisera à titre non limitatif et afin d'en faciliter la compréhension, les termes « avant » ou « arrière » selon la direction par rapport à une orientation axiale déterminée par l'axe O principal de rotation de la transmission du véhicule automobile et les termes « intérieur / interne » ou « extérieur / externe » par rapport à l'axe O et suivant une orientation radiale, orthogonale à ladite orientation axiale.

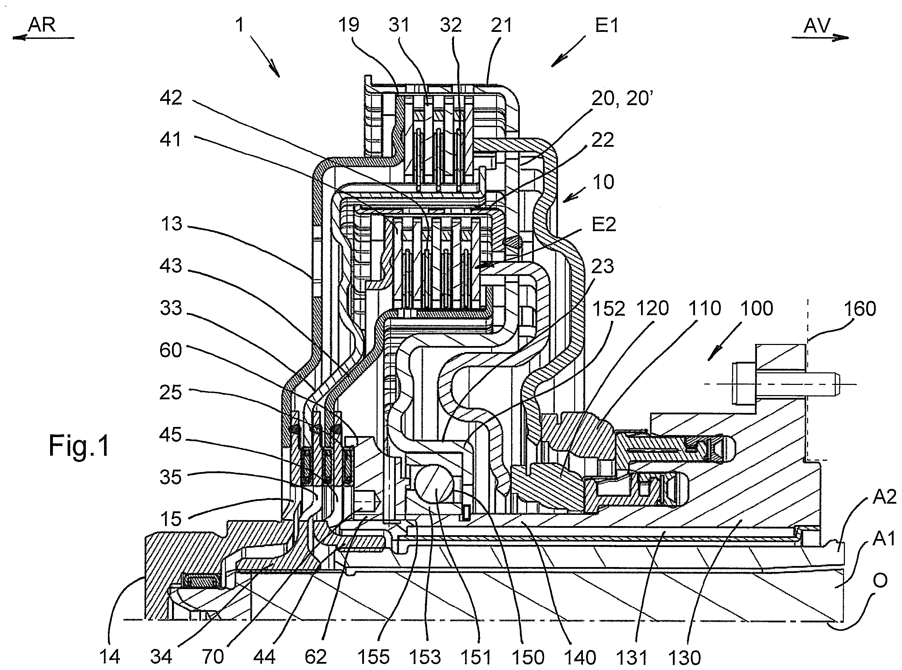

On a représenté sur les figures 1 à 3 un premier mode de mise en œuvre d'un module de transmission de couple. Dans l'exemple illustré sur la figure 1, le module de transmission de couple 1 est dans un état assemblé et comprend notamment un mécanisme d'embrayage humide 10 d'axe de rotation O fixé sur un système d'actionnement 100. Dans l'exemple de la figure 1, le mécanisme d'embrayage humide 10 est un mécanisme à double embrayage humide comprenant un premier embrayage E1 et un deuxième embrayage E2.

Le mécanisme d'embrayage humide 10 comporte autour de l'axe O au moins un élément d'entrée 12 qui est lié en rotation à un arbre menant (non représenté). L'élément d'entrée 12 est situé à l'arrière du mécanisme à double embrayage.

Dans le premier mode de mise en œuvre, l'élément d'entrée 12 présentant globalement une forme en « L », comporte une portion annulaire d'orientation radiale formée par un voile 13 d'entrée et une partie d'orientation axiale formée par un moyeu 14. Le voile 13 d'entrée et le moyeu 14 d'entrée sont solidaires et soudés ensemble par soudage laser par transparence.

Le moyeu 14 est agencé radialement à l'intérieur par rapport au voile 13 d'entrée.

Le moyeu 14 d'entrée est par exemple lié en rotation par l'intermédiaire de cannelures à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur équipant le véhicule automobile.

Le voile 13 d'entrée comporte, à son extrémité radiale externe d'orientation axiale, des dents 19 qui s'étendent radialement vers l'extérieur et qui s'appuient sur un porte-disques d'entrée 20. Le voile 13 d'entrée et le porte-disques d'entrée 20 de couple sont solidaires en rotation et ont une fonction commune de transmettre le couple d'entrée. Le voile 13 d'entrée est dans le cas présent rapporté sur le porte-disques d'entrée 20. Dans une variante non représentée, le voile d'entrée peut être soudé sur le porte-disques d'entrée 20. Dans une autre variante non représentée, le voile d'entrée peut être directement intégré au porte-disques d'entrée 20 de sorte qu'il ne forme qu'une seule et même pièce. De cette manière, le porte-disques d'entrée 20 est agencé pour être lié en rotation avec l'arbre menant selon un axe de rotation O.

Le mécanisme d'embrayage humide 10 est commandé pour accoupler sélectivement ledit arbre menant à un premier arbre A1 mené et à un deuxième arbre A2 mené reliés à une boîte de vitesses équipant le véhicule automobile.

De préférence, le premier arbre A1 mené et le deuxième arbre A2 mené sont coaxiaux. Le premier arbre A1 mené est entraîné en rotation lorsque ledit premier embrayage E1 est fermé et le deuxième A2 arbre mené est entraîné en rotation lorsque ledit deuxième embrayage E2 est fermé.

Le module de transmission de couple 1 comporte également un système d'actionnement 100 agencé pour embrayer ou débrayer lesdits premier et deuxième embrayages E1, E2.

Le mécanisme d'embrayage humide 10 est commandé hydrauliquement par l'intermédiaire d'un fluide sous pression, généralement de l'huile. Le système d'actionnement 100 comprend :
- un premier piston d'actionnement 110 agencé pour configurer le premier embrayage E1 dans une configuration comprise entre la configuration embrayée et la configuration débrayée ;
- un deuxième piston d'actionnement 120 agencé pour configurer le deuxième embrayage E2 dans une configuration comprise entre la configuration embrayée et la configuration débrayée ;
- un carter 130 dans lequel sont logés au moins (en partie) le premier et le deuxième piston d'actionnement 110, 120.

Comme illustré sur la figure 1, le système d'actionnement 100 comprend une portée d'extension axiale 140 intégrée dans le carter et s'étendant axialement en direction de l'élément d'entrée 12. La portée d'extension axiale 140 du système d'actionnement 100 est couplée en rotation avec le carter 130. Dans le cas présent, la portée d'extension axiale 140 est issue de matière avec le carter 130. La portée d'extension axiale 140 comprend une extrémité libre orientée en direction du moyeu 14 d'entrée.

Un palier de guidage 150 est disposé radialement entre la portée d'extension axiale 140 faisant office de support d'embrayage et le porte-disques d'entrée 20. Le palier de guidage 150, pouvant être un roulement à billes ou un palier à aiguilles, guide en rotation les premier et deuxième embrayages E1, E2 par rapport au système d'actionnement 100. Le palier de guidage 150 est en appui axial sur le porte-disques d'entrée 20. Le palier de guidage 150 est inséré dans une portion d'appui cylindrique 23 du porte-disques d'entrée 20 de manière à pouvoir supporter les efforts radiaux du mécanisme d'embrayage humide. Le palier de guidage 150 reprend également les efforts axiaux.

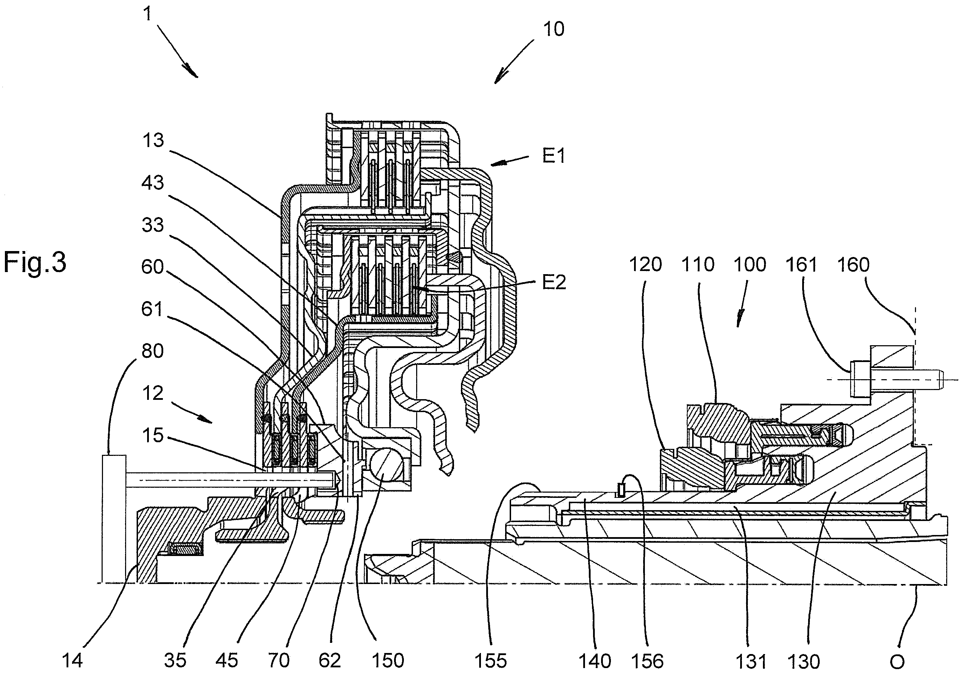

Comme illustré sur les figures 1 et 3, ledit palier de guidage 150 est un roulement à billes à contact oblique et comporte des éléments de roulements 151 disposés radialement entre une bague extérieure de guidage 152 et une bague intérieure de guidage 153.

Une bague de lubrification 60 est également disposée radialement entre la portée d'extension axiale 140 et le porte-disques d'entrée 20. La bague de lubrification est en appui axial sur le palier de guidage 150. La bague de lubrification comprend notamment une portion filetée 62 apte à être vissée sur le module de transmission de couple.

Comme illustré sur la figure 1, lorsque le module de transmission de couple est dans un état assemblé, le mécanisme d'embrayage humide et le système d'actionnement sont fixés solidairement à l'aide d'une liaison filetée 62, 155 dans laquelle la bague de lubrification 60 est vissée directement sur la portée d'extension axiale 140. La liaison filetée 62, 155 est disposée sur l'extrémité libre de la portée d'extension axiale 140.

La portée d'extension axiale 140 du système d'actionnement 100 comprend une portion filetée 155 complémentaire à la portion filetée 62 de la bague de lubrification 60.

Le palier de guidage 150 est en appui axial sur un élément d'arrêt 156. L'élément d'arrêt 156 est un anneau fendu, inséré dans une gorge annulaire formée dans la portée d'extension axiale.

En variante non représentée, l'élément d'arrêt peut être un épaulement formé directement dans la portée d'extension axiale.

Comme illustré sur la figure 1, le premier embrayage E1 est disposé radialement au delà du deuxième embrayage E2.

L'ensemble multidisques du premier embrayage E1 comporte des flasques 31 liés en rotation au porte-disques d'entrée 20 et des disques de friction 32 liés en rotation à un premier porte-disques de sortie 30 de couple. Les disques de friction 32 sont, unitairement, axialement interposés entre deux flasques 31 successifs.

Le porte-disques de sortie 33 du premier embrayage E1 est lié en rotation par engrènement avec les disques de friction 12 et par une liaison cannelée avec ledit premier arbre A1 mené. Le porte-disques de sortie 33 comprend un moyeu de sortie 34 connecté à l'arbre mené A1.

L'ensemble multidisques du deuxième embrayage E2 comporte des flasques 41 liés en rotation au porte-disque d'entrée 20 et des disques de friction 42 liés en rotation à un deuxième porte-disques de sortie 43 de couple.

Le porte-disques de sortie 43 du deuxième embrayage E2 est lié en rotation par engrènement avec les disques de friction 42 et par une liaison cannelée avec ledit deuxième arbre A2 mené. Le porte-disques de sortie 43 comprend un moyeu de sortie 44 connecté à l'arbre mené A2.

Le porte-disques d'entrée 20 de couple est commun au premier et au deuxième embrayage E1 et E2. Le porte-disques d'entrée 20 comporte, en outre, un porte-disque extérieur 21 du premier embrayage E1 et un porte-disque intérieur 22 du deuxième embrayage E2.

Le porte-disques extérieur 21 du premier embrayage E1 comprend notamment une extension axiale agencée pour recevoir l'ensemble multidisques du premier embrayage. L'extension axiale forme une cannelure interne recevant les flasques 31 de l'ensemble multidisque du premier embrayage E1.

Le porte-disques intérieur 22 du deuxième embrayage E2 comprend une extension axiale agencée pour recevoir l'ensemble multidisques du deuxième embrayage. L'extension axiale forme une cannelure interne recevant les flasques 41 de l'ensemble multidisque du deuxième embrayage E2.

Sur sa périphérie interne, le porte-disques d'entrée 20 comprend la portion d'appui cylindrique 23 dans laquelle est inséré le palier de guidage 150.

Comme expliqué précédemment, le mécanisme d'embrayage humide 10 comprend la bague de lubrification 60 de l'embrayage intercalée axialement entre la bague intérieure de guidage 153 du palier de guidage et le moyeu de sortie 34 du premier porte-disques de sortie 33. La bague de lubrification 60 est de forme annulaire. L'alésage intérieur de la bague de lubrification est fileté.

Avantageusement, la bague de lubrification comprend des conduites de lubrification 61 traversant radialement de part en part la bague et débouchant sur le pourtour extérieur. Le carter 130 du système d'actionnement 100 comprend des conduites d'alimentation en fluide de refroidissement 131 qui communiquent directement avec les conduites de lubrification 61 de la bague de lubrification. La bague de lubrification 60 canalise ainsi le fluide de refroidissement en provenance du système d'actionnement en direction des premier et deuxième embrayages E1, E2 et favorise leur lubrification.

La bague de lubrification 60 comprend également une portée cylindrique de centrage 64 destinée à centrer un palier axial 25.

Comme illustré sur les figures 1 à 3, le mécanisme d'embrayage humide 10 comprend également des moyens de préhension 70 formés sur la bague de lubrification 60. Ces moyens de préhension sont aptes à recevoir un outil de préhension utilisé lors de l'assemblage du mécanisme d'embrayage humide sur le module de transmission de couple. Les moyens de préhension 70 formés sur la bague de lubrification 60 comprennent des trous borgnes 70 répartis angulairement autour de l'axe O. Les trous borgnes 70 sont orientés axialement parallèlement à l'axe O.

Les moyens de préhension 70 sont formés sur une face latérale de la bague de lubrification 60 orientée axialement en direction de l'élément d'entrée 12.

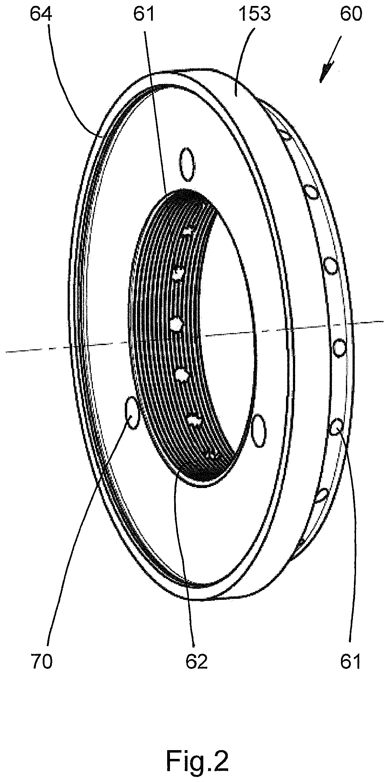

Comme illustré sur la figure 2, le bague de lubrification 60 comprend une portion filetée 62 formée sur l'alésage intérieur de la bague. Les conduites de lubrification 61 sont réparties angulairement autour de l'axe O. Les conduites de lubrification 61 débouchent dans l'alésage intérieur et le pourtour extérieur de la bague de lubrification 60. De manière à diriger le fluide de refroidissement directement sur les embrayages E1, E2, les trous borgnes 70 ne communiquent pas avec les conduites de lubrification 61. L'efficacité du refroidissement du mécanisme d'embrayage humide 10 est ainsi améliorée.

On va maintenant décrire l'assemblage du module de transmission de couple 1 suivant le premier mode de mise en œuvre de l'invention comme illustré aux figures 1 et 3.

Dans l'exemple illustré sur la figure 3, le module de transmission de couple 1 est dans un état désassemblé. Le mécanisme d'embrayage humide 10 est détaché du système d'actionnement 100. Le système d'actionnement 100 est représenté fixé à un carter de transmission 160 par l'intermédiaire de vis de fixation 161.

L'assemblage nécessite l'utilisation d'un outil de préhension 80 qui est fourni avec le module de transmission de couple 1 de manière à formé un kit d'assemblage. L'outil de préhension 80 est apte à pénétrer dans les moyens de préhension 70 réalisés sous forme de trous borgnes ou de rainures.

Des ouvertures de passage d'outil 15, 35, 45 sont aménagées sur le porte-disques d'entrée 20 et sur les premier et deuxième porte-disques de sortie 33, 43. Les ouvertures de passage d'outil sont orientées axialement en direction des moyens de préhension 70 et permettent le passage de l'outil au travers des embrayages E1 et E2 lorsque le mécanisme d'embrayage humide est placé dans une première position d'indexation. Dans cette première position d'indexation angulaire des porte-disques d'entrée et de sortie, les ouvertures de passage d'outil sont sensiblement coaxiales avec les trous borgnes 70 de la bague de lubrification 60. La succession des ouvertures de passage d'outil 15, 35, 45 forme un jeu d'ouvertures de passage d'outil.

Le mécanisme d'embrayage humide peut comprendre plusieurs de jeux d'ouvertures de passage d'outil répartis angulairement autour de l'axe O.

Comme illustré sur la figure 3, le jeu d'ouvertures de passage d'outil 15, 35, 45 délimite un canal rectiligne de passage le long d'un axe de pénétration parallèle à l'axe de rotation O qui traverse le mécanisme d'embrayage humide de part en part jusqu'aux moyens de préhension 70 formés sur la bague de lubrification 60.

De l'arrière vers l'avant selon l'axe O, le jeu d'ouvertures de passage d'outil comprend une première ouverture 15 formée dans le voile d'entrée 13, une deuxième ouverture 35 formée dans le moyeu de sortie 34 du premier porte-disques de sortie 33 et une troisième ouverture 45 formée dans le moyeu de sortie 44 du deuxième porte-disques de sortie 43.

L'assemblage du module de transmission de couple comporte, entre autre, les étapes suivantes :
Selon une première étape, on fournit un mécanisme d'embrayage humide agencé selon une première position d'indexation, un système d'actionnement et un outil de préhension,
Selon une deuxième étape, on fixe le système d'actionnement sur le carter de transmission, notamment à l'aide des vis de fixation 161,
Selon une troisième étape, on introduit l'outil de préhension 80 axialement suivant un axe de pénétration en direction du palier de guidage 150, à travers les ouvertures de passage d'outil formée sur le mécanisme d'embrayage humide. L'outil est inséré jusqu'à ce qu'une extrémité de l'outil de préhension 80 vienne en prise avec les moyens de préhension 70,
Selon une quatrième étape, on positionne et on visse le mécanisme d'embrayage humide sur le système d'actionnement à l'aide de l'outil de préhension.
Selon ce procédé, par une simple action de vissage du mécanisme d'embrayage humide 10 sur la portée d'extension axiale 140 du système d'actionnement, on assemble complètement le module de transmission de couple.

Le vissage s'effectue jusqu'à ce que le mécanisme d'embrayage humide 10 vienne en butée sur le carter 130 du système d'actionnement, c'est-à-dire jusqu'à ce que le palier de guidage 150 vienne en butée sur l'élément d'arrêt 156. Le vissage du sous-ensemble pré-assemblé, constitué par le mécanisme d'embrayage humide 10, sur le carter du système d'actionnement crée une liaison sans jeu entre les deux sous-ensembles. La liaison filetée permet de récupérer l'ensemble des tolérances de montage et de fabrication présentes dans le mécanisme d'embrayage humide 10.

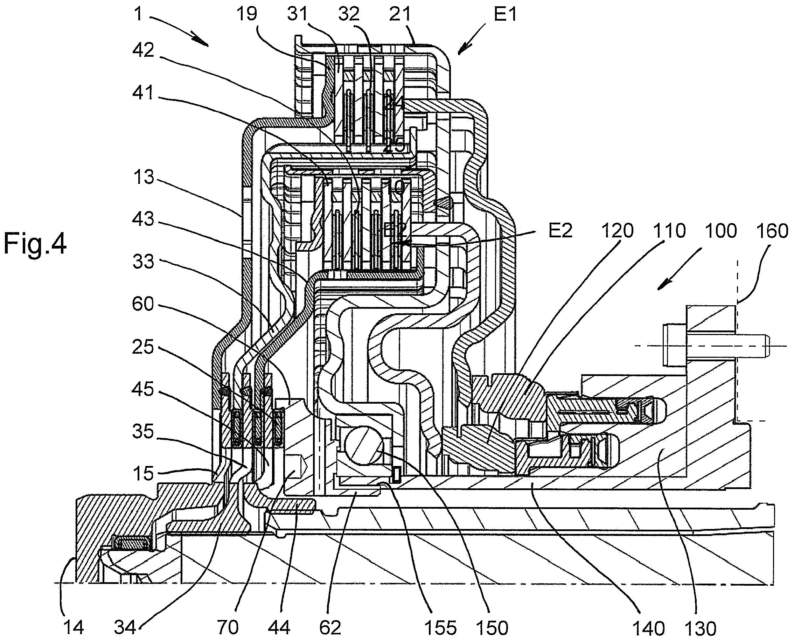

La figure 4 présente un deuxième mode de mise en œuvre de l'invention semblable au premier mode dans lequel la bague de lubrification 60 comprend une portion filetée 62 formée sur une portée externe de ladite bague. La portion filetée 62 est externe.

La portion filetée 62 est vissée sur une portion filetée 155 complémentaire formée sur l'alésage intérieur de l'extrémité libre de la portée d'extension axiale 140.

Dans l'exemple de la figure 4, le système d'actionnement 100 comprend une portée d'extension axiale 140 rapportée sur le carter 130 du système d'actionnement 100. La portée d'extension axiale 140 est emmanchée en force dans le carter 130 du système d'actionnement 100.

Le module de transmission de couple illustré sur la figure 4 est fonctionnellement identique à celui illustré sur les figures 1 à 3.

L'invention n'est pas limitée aux exemples de réalisation qui viennent d'être décrit. Le mécanisme d'embrayage humide selon l'invention peut convenir également au mécanisme d'embrayage de coupure, de type K0, utilisé dans les transmissions hybrides pour coupler le moteur thermique au moteur électrique après la phase de démarrage du véhicule. Dans cet exemple, le mécanisme d'embrayage humide ne comprend qu'un seul embrayage.

## Revendications

1. Mécanisme d'embrayage humide (10) pour module de transmission de couple comportant au moins un premier embrayage (E1), de type multidisque, commandé pour accoupler sélectivement un arbre menant à un premier arbre mené, par exemple un arbre de boite de vitesses et comprenant :
- un porte-disques d'entrée (20) de couple agencé pour être lié en rotation avec l'arbre menant selon un axe de rotation (O) par l'intermédiaire d'un moyeu (14) d'entrée ;
- un ensemble multidisques rapporté sur le porte-disques d'entrée comportant des flasques (31) et des disques de friction (32);
- un palier de guidage (150) inséré dans une portion d'appui cylindrique (23) du porte-disques d'entrée (20) et configuré pour supporter les efforts radiaux du mécanisme d'embrayage humide, **caractérisée en ce que** le mécanisme comportent en plus,
- une bague de lubrification (60) de l'embrayage dans laquelle des conduites de lubrification (61) sont intercalées axialement entre le palier de guidage et le moyeu (14) d'entrée, ladite bague de lubrification (60) étant en appui axial sur le palier de guidage (150) et comportant une portion filetée (62) apte à être vissée sur le module de transmission de couple.

2. Mécanisme d'embrayage humide selon la revendication précédente, comprenant des moyens de préhension (70) formés sur la bague de lubrification (60), les moyens de préhension étant apte à recevoir un outil de préhension (80).

3. Mécanisme d'embrayage humide selon la revendication 2, dans lequel la bague de lubrification (60) comprend les moyens de préhension (70) formés sur une face latérale opposée à la face latérale venant en appui axial sur le palier de guidage (150).

4. Mécanisme d'embrayage humide selon l'une des revendications 2 ou 3, dans lequel les moyens de préhension (70) sont des trous répartis angulairement autour de l'axe (O), de préférence les trous (70) sont borgnes.

5. Mécanisme d'embrayage humide selon l'une des revendications 2 ou 3, dans lequel les moyens de préhension (70) sont des rainures réparties angulairement autour de l'axe (O), de préférence les rainures sont orientées radialement par rapport à l'axe (O).

6. Mécanisme d'embrayage humide selon l'une quelconque des revendications précédentes, dans lequel la bague de lubrification (60) comprend un alésage intérieur et un pourtour extérieur et les conduites de lubrification (61) traversent radialement de part en part ladite bague (60).

7. Mécanisme d'embrayage humide selon l'une quelconque des revendications précédentes, dans lequel la portion filetée (62) est formée sur l'alésage intérieur de la bague de lubrification (60).

8. Mécanisme d'embrayage humide selon l'une quelconque des revendications précédentes, comprenant un deuxième embrayage (E2), de type multidisques, commandés pour accoupler sélectivement un arbre menant à un deuxième arbre mené,
les premier et deuxième embrayages (E1, E2) étant disposés radialement l'un au-dessus de l'autre,
le deuxième embrayage comprenant un porte-disques d'entrée (20') de couple solidaire en rotation avec le porte-disques d'entrée (20) de couple du premier embrayage, de manière à former un porte-disques d'entrée (20) commun comprenant la portion d'appui cylindrique (23) dans laquelle est insérée le palier de guidage (150) commun aux premier et deuxième embrayages (E1, E2).

9. Mécanisme d'embrayage humide selon la revendication précédente, dans lequel le premier embrayage E1 comprend un premier porte-disques de sortie (33) de couple agencé pour être lié en rotation avec le premier arbre mené par l'intermédiaire d'un moyeu de sortie (34) et le deuxième embrayage E2 comprend un deuxième porte-disques de sortie (43) de couple agencé pour être lié en rotation avec le deuxième arbre mené par l'intermédiaire d'un moyeu de sortie (44) ;

10. Mécanisme d'embrayage humide selon la revendication précédente, comprenant un palier axial (25) interposé axialement entre la bague de lubrification (60) et le moyeu de sortie (44) du deuxième porte-disques de sortie (43), ledit palier axial (25) étant configuré pour supporter les efforts axiaux du mécanisme d'embrayage humide.

11. Mécanisme d'embrayage humide selon la revendication 9 ou 10, dans lequel des ouvertures de passage d'outil (15, 35, 45) sont aménagées sur le porte-disques d'entrée (20) et / ou sur le premier porte-disques de sortie (33) et / ou le deuxième porte-disques de sortie (43), les ouvertures de passage d'outil (15, 35, 45) sont orientées axialement en direction des moyens de préhension (70) et sont aptes à laisser passer un outil de préhension (80).

12. Module de transmission de couple (1) comprenant :
- un mécanisme d'embrayage humide (10) selon l'une quelconque des revendications 1 à 11,
- un système d'actionnement (100) du mécanisme d'embrayage humide (E1, E2) permettant de configurer le premier et/ou le deuxième embrayage (E1, E2) dans une configuration embrayée ou débrayée, ledit système d'actionnement comprenant une portée d'extension axiale (140) selon l'axe (O) apte à supporter radialement le mécanisme d'embrayage humide,
**caractérisé en ce que** le mécanisme d'embrayage humide (10) et le système d'actionnement (100) sont configurés pour être fixés solidairement à l'aide d'une liaison filetée (62, 155) dans laquelle la bague de lubrification (60) est vissée directement sur la portée d'extension axiale (140).

13. Module de transmission de couple (1) selon la revendication précédente, dans lequel la portée d'extension axiale (140) du système d'actionnement comprend une portion filetée (155) complémentaire à la portion filetée (62) de la bague de lubrification.

14. Module de transmission de couple (1) selon la revendication 12 ou 13, dans lequel la portée d'extension axiale (140) est formée directement dans le carter (130).

15. Module de transmission de couple (1) selon la revendication 12 ou 13, dans lequel la portée d'extension axiale (140) est rapportée sur le carter (130).

16. Module de transmission de couple (1) selon l'une quelconque des revendications 12 à 15, dans lequel le palier de guidage (150) est en appui axial sur un élément d'arrêt (156) formé directement sur la portée d'extension axiale (140) ou rapporté sur la portée d'extension axiale.

17. Procédé de montage d'un module de transmission de couple (1) sur un carter de transmission selon l'une des revendications 12 à 16 comportant au moins les étapes suivantes :
- fournir un mécanisme d'embrayage humide (10) agencé selon une première position d'indexation, un système d'actionnement (100) et un outil de préhension (80),
- fixer le système d'actionnement (100) sur le carter de transmission (160),
- introduire l'outil de préhension (80) axialement suivant un axe de pénétration en direction du palier de guidage (150), à travers les ouvertures (15, 35, 45) de passage d'outil formée sur le mécanisme d'embrayage humide, de manière à ce qu'une extrémité de l'outil de préhension soit en prise avec les moyens de préhension (70),
- puis positionner et visser le mécanisme d'embrayage humide (10) sur le système d'actionnement (100) à l'aide de l'outil de préhension (80).

## Patentansprüche

1. Nasskupplungsmechanismus (10) für ein Drehmomentübertragungsmodul mit mindestens einer ersten Kupplung (E1) vom Typ Mehrscheibenkupplung, der so gesteuert wird, dass er eine Antriebswelle selektiv mit einer ersten Abtriebswelle, beispielsweise einer Getriebewelle, koppelt, und Folgendes umfasst:
- einen Drehmoment-Eingangsscheibenträger (20), der so angeordnet ist, dass er entlang einer Drehachse (O) über eine Eingangsnabe (14) drehbar mit der Antriebswelle verbunden ist;
- eine am Eingangsscheibenträger angebrachte Mehrscheibenanordnung mit Flanschen (31) und Reibscheiben (32);
- ein Führungslager (150), das in einen zylinderförmigen Stützabschnitt (23) des Eingangsscheibenträgers (20) eingesetzt und so konfiguriert ist, dass es den Radialkräften des Nasskupplungsmechanismus standhält, **dadurch gekennzeichnet, dass** der Mechanismus ferner Folgendes aufweist:
- einen Ring (60) zum Schmieren der Kupplung, bei dem Schmierleitungen (61) axial zwischen dem Führungslager und der Eingangsnabe (14) angeordnet sind,
wobei der Schmierring (60) axial am Führungslager (150) anliegt und einen Gewindeabschnitt (62) aufweist, der dazu geeignet ist, auf das Drehmomentübertragungsmodul geschraubt zu werden.

2. Nasskupplungsmechanismus nach dem vorangehenden Anspruch, umfassend Greifmittel (70), die am Schmierring (60) ausgebildet sind, wobei die Greifmittel dazu geeignet sind, ein Greifwerkzeug (80) aufzunehmen.

3. Nasskupplungsmechanismus nach Anspruch 2, wobei der Schmierring (60) die Greifmittel (70) umfasst, die an einer Seitenfläche ausgebildet sind, die der axial am Führungslager (150) anliegenden Seitenfläche gegenüberliegt.

4. Nasskupplungsmechanismus nach einem der Ansprüche 2 oder 3, wobei die Greifmittel (70) Löcher sind, die winkelmäßig um die Achse (O) verteilt sind, wobei die Löcher (70) vorzugsweise Sacklöcher sind.

5. Nasskupplungsmechanismus nach einem der Ansprüche 2 oder 3, wobei die Greifmittel (70) Nuten sind, die winkelmäßig um die Achse (O) verteilt sind, wobei die Nuten vorzugsweise radial zur Achse (O) ausgerichtet sind.

6. Nasskupplungsmechanismus nach einem der vorangehenden Ansprüche, wobei der Schmierring (60) eine Innenbohrung und einen Außenumfang aufweist und die Schmierleitungen (61) den Ring (60) radial durchdringen.

7. Nasskupplungsmechanismus nach einem der vorangehenden Ansprüche, wobei der Gewindeabschnitt (62) an der Innenbohrung des Schmierrings (60) ausgebildet ist.

8. Nasskupplungsmechanismus nach einem der vorangehenden Ansprüche, umfassend eine zweite Kupplung (E2) vom Typ Mehrscheibenkupplung, der so gesteuert wird, dass er eine Antriebswelle selektiv mit einer zweiten Abtriebswelle koppelt,
wobei die erste und die zweite Kupplung (E1, E2) radial übereinander angeordnet sind,
wobei die zweite Kupplung einen Drehmoment-Eingangsscheibenträger (20') umfasst, der drehfest mit dem Drehmoment-Eingangsscheibenträger (20) der ersten Kupplung verbunden ist, um einen gemeinsamen Eingangsscheibenträger (20) zu bilden, der den zylindrischen Stützabschnitt (23) umfasst, in den das Führungslager (150), das der ersten und der zweiten Kupplung (E1, E2) gemeinsam ist, eingesetzt ist.

9. Nasskupplungsmechanismus nach dem vorangehenden Anspruch, wobei die erste Kupplung E1 einen ersten Drehmoment-Ausgangsscheibenträger (33) umfasst, der so angeordnet ist, dass er über eine Ausgangsnabe (34) drehbar mit der ersten Abtriebswelle verbunden ist, und wobei die zweite Kupplung E2 einen zweiten Drehmoment-Ausgangsscheibenträger (43) umfasst, der so angeordnet ist, dass er über eine zweite Ausgangsnabe (44) drehbar mit der zweiten Abtriebswelle verbunden ist;

10. Nasskupplungsmechanismus nach dem vorangehenden Anspruch, umfassend ein Axiallager (25), das axial zwischen dem Schmierring (60) und der Ausgangsnabe (44) des zweiten Ausgangsscheibenträgers (43) angeordnet ist, wobei das Axiallager (25) so konfiguriert ist, dass es den Axialkräften des Nasskupplungsmechanismus standhält.

11. Nasskupplungsmechanismus nach Anspruch 9 oder 10, wobei am Eingangsscheibenträger (20) und/oder am ersten Ausgangsscheibenträger (33) und/oder am zweiten Ausgangsscheibenträger (43) Werkzeugdurchgangsöffnungen (15, 35, 45) angeordnet sind, wobei die Werkzeugdurchgangsöffnungen (15, 35, 45) axial in Richtung der Greifmittel (70) ausgerichtet und dazu geeignet sind, ein Greifwerkzeug (80) durchzulassen.

12. Drehmomentübertragungsmodul (1) umfassend:
- einen Nasskupplungsmechanismus (10) nach einem der Ansprüche 1 bis 11,
- ein System (100) zur Betätigung des Nasskupplungsmechanismus (E1, E2), das es ermöglicht, die erste und/oder die zweite Kupplung (E1, E2) in einer eingerückten oder ausgerückten Konfiguration zu konfigurieren, wobei das Betätigungssystem eine axialen Erstreckungsbereich (140) entlang der Achse (O) umfasst, der dazu geeignet ist, den Nasskupplungsmechanismus radial zu stützen,
**dadurch gekennzeichnet, dass** der Nasskupplungsmechanismus (10) und das Betätigungssystem (100) so konfiguriert sind, dass sie mit Hilfe einer Gewindeverbindung (62, 155), bei der der Schmierring (60) direkt auf den axialen Erstreckungsbereich (140) geschraubt ist, fest miteinander verbunden sind.

13. Drehmomentübertragungsmodul (1) nach dem vorangehenden Anspruch, wobei der axiale Erstreckungsbereich (140) des Betätigungssystems einen Gewindeabschnitt (155) aufweist, der komplementär zum Gewindeabschnitt (62) des Schmierrings ist.

14. Drehmomentübertragungsmodul (1) nach Anspruch 12 oder 13, wobei der axiale Erstreckungsbereich (140) direkt im Gehäuse (130) ausgebildet ist.

15. Drehmomentübertragungsmodul (1) nach Anspruch 12 oder 13, wobei der axiale Erstreckungsbereich (140) am Gehäuse (130) angebracht ist.

16. Drehmomentübertragungsmodul (1) nach einem der Ansprüche 12 bis 15, wobei das Führungslager (150) axial an einem Anschlagelement (156) anliegt, das direkt auf dem axialen Erstreckungsbereich (140) ausgebildet oder auf dem axialen Erstreckungsbereich angebracht ist.

17. Verfahren zur Montage eines Drehmomentübertragungsmoduls (1) nach einem der Ansprüche 12 bis 16 an einem Getriebegehäuse, umfassend zumindest die folgenden Schritte:
- Bereitstellen eines in einer ersten Indexposition angeordneten Nasskupplungsmechanismus (10), eines Betätigungssystems (100) und eines Greifwerkzeugs (80),
- Befestigen des Betätigungssystems (100) am Getriebegehäuse (160),
- Einführen des Greifwerkzeugs (80) axial entlang einer Eindringachse in Richtung des Führungslagers (150) durch die Werkzeugdurchgangsöffnungen (15, 35, 45), die am Nasskupplungsmechanismus ausgebildet sind, so dass ein Ende des Greifwerkzeugs mit den Greifmitteln (70) in Eingriff steht,
- anschließendes Positionieren und Festschrauben des Nasskupplungsmechanismus (10) mit Hilfe des Greifwerkzeugs (80) am Betätigungssystem (100).

## Claims

1. Wet clutch mechanism (10) for a torque transmission module, comprising at least one first clutch (E1), of the multi-disc type, operated in such a way as to selectively couple a driving shaft to a first driven shaft, for example a gearbox shaft, and comprising:
- a torque input disc carrier (20) arranged so as to be rotationally connected to the driving shaft about an axis of rotation (O) by way of an input hub (14);
- a multi-disc assembly which is attached to the input disc carrier and which has flanges (31) and friction discs (32);
- a guide bearing (150) inserted in a cylindrical support portion (23) of the input disc carrier (20) and configured to withstand the radial forces of the wet clutch mechanism, **characterized in that** the mechanism further comprises:
- a lubricating ring (60) of the clutch, in which lubricating ducts (61) are interposed axially between the guide bearing and the input hub (14),
said lubricating ring (60) bearing axially on the guide bearing (150) and comprising a threaded portion (62) capable of being screwed onto the torque transmission module.

2. Wet clutch mechanism according to the preceding claim, comprising gripping means (70) which are formed on the lubricating ring (60), the gripping means being capable of receiving a gripping tool (80).

3. Wet clutch mechanism according to Claim 2, wherein the lubricating ring (60) comprises the gripping means (70) which are formed on a lateral face opposite to the lateral face bearing axially on the guide bearing (150).

4. Wet clutch mechanism according to either of Claims 2 and 3, wherein the gripping means (70) are holes which are distributed angularly about the axis (O), preferably the holes (70) are blind holes.

5. Wet clutch mechanism according to either of Claims 2 and 3, wherein the gripping means (70) are slots which are distributed angularly about the axis (O), preferably the slots are oriented radially with respect to the axis (O).

6. Wet clutch mechanism according to any one of the preceding claims, wherein the lubricating ring (60) comprises an inner bore and an outer perimeter, and the lubricating ducts (61) pass radially right through said ring (60).

7. Wet clutch mechanism according to any one of the preceding claims, wherein the threaded portion (62) is formed on the inner bore of the lubricating ring (60).

8. Wet clutch mechanism according to any one of the preceding claims, comprising a second clutch (E2), of the multi-disc type, operated in such a way as to selectively couple a driving shaft to a second driven shaft,
the first and second clutches (E1, E2) being disposed radially one above the other,
the second clutch comprising a torque input disc carrier (20') which is rotationally secured to the torque input disc carrier (20) of the first clutch, so as to form a common input disc carrier (20) comprising the cylindrical support portion (23) in which the guide bearing (150) common to the first and second clutches (E1, E2) is inserted.

9. Wet clutch mechanism according to the preceding claim, wherein the first clutch E1 comprises a first torque output disc carrier (33) arranged so as to be rotationally connected to the first driven shaft by way of an output hub (34), and the second clutch E2 comprises a second torque output disc carrier (43) arranged so as to be rotationally connected to the second driven shaft by way of an output hub (44).

10. Wet clutch mechanism according to the preceding claim, comprising an axial bearing (25) interposed axially between the lubricating ring (60) and the output hub (44) of the second output disc carrier (43), said axial bearing (25) being configured to withstand the axial forces of the wet clutch mechanism.

11. Wet clutch mechanism according to Claim 9 or 10, wherein openings (15, 35, 45) for the passage of a tool are created on the input disc carrier (20) and/or on the first output disc carrier (33) and/or the second output disc carrier (43), the openings (15, 35, 45) for the passage of a tool are oriented axially in the direction of the gripping means (70) and are capable of allowing a gripping tool (80) to pass through.

12. Torque transmission module (1) comprising:
- a wet clutch mechanism (10) according to any one of Claims 1 to 11,
- an actuating system (100) of the wet clutch mechanism (E1, E2) making it possible to configure the first and/or the second clutch (E1, E2) in an engaged or disengaged configuration, said actuating system comprising an axially extending bearing surface (140) along the axis (O) that is capable of radially supporting the wet clutch mechanism,
**characterized in that** the wet clutch mechanism (10) and the actuating system (100) are configured to be fixed securely by means of a threaded connection (62, 155) in which the lubricating ring (60) is screwed directly onto the axially extending bearing surface (140).

13. Torque transmission module (1) according to the preceding claim, wherein the axially extending bearing surface (140) of the actuating system comprises a threaded portion (155) complementary to the threaded portion (62) of the lubricating ring.

14. Torque transmission module (1) according to Claim 12 or 13, wherein the axially extending bearing surface (140) is formed directly in the casing (130).

15. Torque transmission module (1) according to Claim 12 or 13, wherein the axially extending bearing portion (140) is attached to the casing (130).

16. Torque transmission module (1) according to any one of Claims 12 to 15, wherein the guide bearing (150) bears axially on a stopping element (156) formed directly on the axially extending bearing surface (140) or attached to the axially extending bearing surface.

17. Method for assembling a torque transmission module (1) on a transmission casing according to one of Claims 12 to 16, comprising at least the following steps:
- providing a wet clutch mechanism (10) arranged in a first indexing position, an actuating system (100) and a gripping tool (80),
- fixing the actuating system (100) to the transmission casing (160),
- introducing the gripping tool (80) axially along an axis of penetration in the direction of the guide bearing (150), through the openings (15, 35, 45) for the passage of a tool that are formed on the wet clutch mechanism, in such a way that an end of the gripping tool is in engagement with the gripping means (70),
- then positioning and screwing the wet clutch mechanism (10) onto the actuating system (100) by means of the gripping tool (80).
